# EUROPÄISCHE PATENTANMELDUNG

(11) **EP 0 730 821 A1**
(43) Veröffentlichungstag der Anmeldung: **11.09.1996**
(21) Anmeldenummer: 96890040.7
(22) Anmeldetag: 07.03.1996
(51) Int. Cl.: A01G 1/00, E04D 11/00

(54) **Begrünungsmatte**

(30) Priorität: 07.03.1995 AT 391/95
(71) Anmelder: Reither, Peter Dipl.-Ing., 4040 Linz (AT); Terlinden, Christoph, 4232 Hagenberg (AT); Woisetschläger, Peter Dr., 4040 Linz (AT)
(72) Erfinder: Reither, Peter Dipl.-Ing., 4040 Linz (AT); Terlinden, Christoph, 4232 Hagenberg (AT); Woisetschläger, Peter Dr., 4040 Linz (AT)
(74) Vertreter: Hübscher, Heiner, Dipl.-Ing.

(57) **Zusammenfassung**

Eine Begrünungsmatte (1) mit einer Trägerschicht für flächig verteiltes Saatgut weist, um bei leichter Verlegbarkeit einen ausgezeichneten Vegetationserfolg und nachhaltigen Bodenschutz zu erreichen, einen Schichtaufbau auf, wobei eine untere textile Trägerschicht (11) unter Zwischenlage einer Keimsubstrat (13) und Saatgut (14) umfassenden Wachstumsschicht (12) mit einer oberen faserigen Halteschicht (15) vernadelt ist.

## Beschreibung

Die Erfindung bezieht sich auf eine Begrünungsmatte mit einer Trägerschicht für flächig verteiltes Saatgut.

Um freie Bodenflächen möglichst schnell begrünen zu können, gibt es Begrünungsmatten, die bisher aus einem Stroh- oder Fasergeflecht und in das Geflecht eingebetteten oder aufgeklebten Samenkörnern bestehen, so daß diese Matten in Humus verlegt werden müssen, um die Samenkörner zum Keimen zu bringen. Die Begrünungsmatten sind daher nur sehr beschränkt einsetzbar, sie sind sperrig und wenig widerstandsfähig und bringen auch nur einen geringen Erosionsschutz für den Untergrund mit sich.

Der Erfindung liegt daher die Aufgabe zugrunde, diese Mängel zu beseitigen und eine Begrünungsmatte der eingangs geschilderten Art zu schaffen, die sich neben ihrer leichten Verlegbarkeit durch ihren hervorragenden Vegetationserfolg und nachhaltigen Schutz der Vegetationsschicht gegen Wind- und Wassererosion auszeichnet.

Die Erfindung löst diese Aufgabe dadurch, daß eine untere textile Trägerschicht unter Zwischenlage einer Keimsubstrat und Saatgut aufweisenden Wachstumsschicht mit einer oberen faserigen Halteschicht vernadelt ist. Diese Begrünungsmatte nimmt in ihrer Wachstumsschicht nicht nur das Saatgut auf, sondern zusätzlich auch das zum Keimen des Saatgutes erforderliche Keimsubstrat, so daß die Matte praktisch unabhängig von der jeweiligen Bodenbeschaffenheit überall mit gleichem Erfolg verlegt werden kann. Die Trägerschicht besteht dabei aus Geweben, Gewirken, Vliesen oder Matten aus synthetischem und/ oder natürlichem Fasermaterial und soll neben ihrer Tragfunktion für die Wachstumsschicht Feuchtigkeit speichern und verteilen und entsprechend ihren Festigkeitseigenschaften zur Bodenverfestigung und Bodensicherung dienen. Die Wachstumsschicht umfaßt als Keimsubstrat ein Trocken- oder Feuchtsubstrat, das über hohes Wasserhaltevermögen verfügt und mit einem ausreichenden Gehalt an Nährstoffen, wie Stickstoff, Phosphor, Kali u. dgl., für ein Pflanzenwachstum von 1 bis 5 Jahren versehen bzw. angereichert ist. In diesem Substrat kann sich das Saatgut zu gesunden, überlebensfähigen und widerstandsfähigen Pflanzen entwickeln, wobei in die Wachstumsschicht verschiedene Grassamen oder andere zur Begrünung geeignete Pflanzensamen, aber auch schon an- oder ausgekeimte Pflänzlinge und ähnliches Pflanzgut eingebettet sein können. Die obere Halteschicht ist mit den untenliegenden Schichten, insbesondere der Trägerschicht, mechanisch durch das Vernadeln verfestigt und sorgt für den Zusammenhalt des Schichtaufbaues. Die faserige Struktur erlaubt dabei einerseits ein ungehindertes Anwachsen der Vegetation und verhindert anderseits ein Ausschwemmen der Humusschicht und schützt gegen Wind- und Wassererosion. Mit diesen Matten, die sich in Rollenform liefern und dann leicht durch Aufrollen und Fixieren mittels Erdhaken verlegen lassen, können Straßenböschungen, Sportplätze, Deponien, Abräumhalden, Baustellen, Parkanlagen, Flachdächer u. dgl. rationell begrünt werden, wobei sich diese Matten an jede Gelände form vollständig anpassen und auch an steilen Böschungen gut haften. Durch die Selbstversorgung des Saatgutes innerhalb der Matte für die Keimungszeit wird nicht nur das Auskeimen mit bestem Erfolg gewährleistet, sondern darüber hinaus auch ein festes Verwachsen der Vegetation mit dem Mutterboden garantiert. Es kommt zu einem Begrünen mit gleichzeitigem Erosionsschutz, die Matte bringt eine sofortige Begehbarkeit der zu begrünenden Fläche mit sich und es ist sogar möglich, bereits vorbegrünte Matten zu verlegen, um den Begrünungserfolg zu beschleunigen.

Besteht die Halteschicht aus einem losen, in die Wachstumsschicht eingebundenen Fasergebilde, kommt es nach dem Einnadeln der Fasern in die Trägerschicht zu einer Integration von Halte- und Wachstumsschicht, so daß die Fasern der Halteschicht die Wachstumsschicht durchdringen und eine Art Verbund zwischen diesen Schichten entsteht, der ohne Ausbildung einer eigentlichen Deckschicht die gewünschte Verfestigung der Wachstumsschicht gewährleistet.

Die Halteschicht kann auch aus einem offenporigen Faservlies, -gewebe od. dgl. bestehen, wodurch sich ein Art Sandwichaufbau mit einer unteren Trägerschicht, einer oberen Deckschicht und einer Zwischenschicht aus der Wachstumsschicht ergibt, was einen besonders guten Erosionsschutz mit sich bringt. Die Vlies- bzw. Gewebestruktur erlaubt dabei ein unbehindertes Hindurch- und Auswachsen der Keimlinge und Jungpflanzen, wodurch trotz des Vegetationserfolges eine besondere widerstandsfähige Begrünungsmatte entsteht.

Eine weitere Möglichkeit des Mattenaufbaues ergibt sich, wenn die Wachstumsschicht eine untere Lage aus Keimsubstrat und eine obere Lage aus zwischen zwei offenporige Faservliese od. dgl. eingebettetem Saatgut aufweist, wobei das außenliegende Faservlies die Halteschicht bildet. Hier werden die Samenkörner oder Pflänzlinge des Saatgutes lagegesichert in die Wachstumsschicht eingebracht und gewissermaßen auf die Keimsubstratlage aufgelegt, was je nach Saatgutart für das An- und Auswachsen bestimmter Saatgutsorten von Vorteil ist.

Zweckmäßigerweise bildet dann gleich die abdeckende Faservlieslage die Halteschicht der Begrünungsmatte.

Die Fasern der Halteschicht können je nach Einsatz und Verwendungszweck der Begrünungsmatte aus verrottbarem oder unverrottbarem Material bestehen und es ist auch möglich, die Trägerschicht aus verrottbarem Material herzustellen, so daß nach dem Anwachsen des Saatgutes ein natürlicher Bewuchs ohne ein Zurückbleiben künstlicher Mattenbestandteile entstehen kann.

Um allerdings eine langanhaltende Schutzwirkung und Oberflächenverfestigung des Boden zu erreichen, kann die Trägerschicht auch aus einem unverrottbaren Kunstfaservlies, -gewebe od. dgl. bestehen, dessen Festigkeitseigenschaften daher dauerhaft und zusätzlich zum Pflanzenwuchs genutzt werden können.

Nach einer besonders vorteilhaften Ausgestaltung der Erfindung besteht die Trägerschicht aus zwei Lagen Kunstfaservlies od. dgl., zwischen denen parallelverlaufende Bewässerungsschläuche verlegt sind, so daß in einem Schritt mit dem Begrünen einer Fläche gleichzeitig auch ein Bewässerungssystem installiert wird, wozu lediglich die Bewässerungsschläuche über geeignete Anschlüsse mit einem Wasserverteiler eines Leitungssystems verbunden werden müssen. Die Bewässerungsschläuche sind in geeignetem Abstand gelocht oder ausreichend porös und versorgen die Wachstumsschicht mit der zum Keimen erforderlichen Feuchtigkeit unabhängig von den Boden- und Witterungsverhältnissen, wobei die Trägerschicht selbst auch für die Verteilung des aus den Schläuchen austretenden Wassers in den Schlauchzwischenbereichen sorgt. Der Vegetationserfolg ist hier auch bei sonst wachstumsfeindlichen Umweltverhältnissen sichergestellt.

Um eine Beschädigung oder gar Zerstörung der Bewässerungsschläuche beim Verfestigen der Mattenschichten zu verhindern, sind die Träger- und Wachstumsschichten in den Längsbereichen der Bewässerungsschläuche unvernadelt, was einem Zerreißen der Schläuche durch eindringende Nadeln vorbeugt, ohne die Mattentestigkeit oder den Produktionsvorgang zu beeinträchtigen.

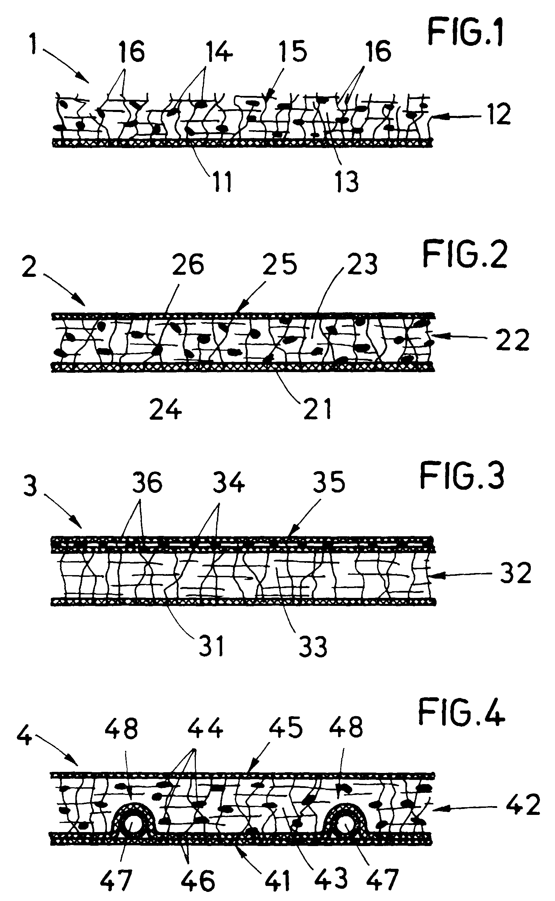

In der Zeichnung ist der Erfindungsgegenstand beispielsweise näher veranschaulicht, und zwar zeigen die
- Fig. 1 bis 4: verschiedene Ausführungsbeispiele einer erfindungsgemäßen Begrünungsmatte jeweils in einem Aufbauschema.

Die dargestellten Begrünungsmatten 1, 2, 3, 4 umfassen im wesentlichen eine untere textile Trägerschicht 11, 21, 31, 41, eine mittlere Wachstumsschicht 12, 22, 32, 42 aus einem Keimsubstrat 13, 23 33, 43 und Saatgut 14, 24, 34, 44 sowie eine obere faserige Halteschicht 15, 25, 35, 45, welche Schichten miteinander zur Verfestigung vernadelt sind.

Gemäß dem Ausführungsbeispiel nach Fig. 1 besteht die Halteschicht 15 aus einem losen, in die Wachstumsschicht 12 eingebundenen Gebilde aus einzelnen Fasern 16, die durch die Wachstumsschicht 12 hindurch in die Trägerschicht 11 eingenadelt sind.

Gemäß dem Ausführungsbeispiel nach Fig. 2 besteht die Halteschicht 25 aus einem offenporigen Faservlies 26, das mit der Trägerschicht 21 vollflächig vernadelt ist und die Wachstumsschicht 22 nach außen hin abdeckt.

Gemäß dem Ausführungsbeispiel nach Fig. 3 setzt sich die Wachstumsschicht 32 aus einer unteren Lage Keimsubstrat 33 und einer oberen Lage aus zwischen zwei offenporige Faservliese 36 eingebettetem Saatgut 34 zusammen, wobei die Faservliese 36 dieser oberen Lage die Halteschicht 35 bilden.

Gemäß dem Ausführungsbeispiel nach Fig. 4 besteht die Trägerschicht 41 aus zwei Lagen Kunstfaservlies, zwischen denen parallelverlaufende Bewässerungsschläuche 47 verlegt sind. Diese Schläuche sind porös oder mit Abstand gelocht, um die Begrünungsmatte 4 mit Feuchtigkeit zu versorgen, wobei die Träger- und Wachstumsschichten 41, 42 in den Längsbereichen 48 der Bewässerungsschläuche 47 unvernadelt sind, um bei der Herstellung die Schläuche 47 nicht zu beschädigen.

## Patentansprüche

1. Begrünungsmatte (1) mit einer Trägerschicht für flächig verteiltes Saatgut, dadurch gekennzeichnet, daß eine untere textile Trägerschicht (11, 21, 31, 41) unter Zwischenlage einer Keimsubstrat (13, 23, 33, 43) und Saatgut (14, 24, 34, 44) aufweisenden Wachstumsschicht (12, 22, 32, 42) mit einer oberen faserigen Halteschicht (15, 25, 35, 45) vernadelt ist.

2. Begrünungsmatte nach Anspruch 1, dadurch gekennzeichnet, daß die Halteschicht (15) aus einem losen, in die Wachstumsschicht (12) eingebundenen Fasergebilde (16) besteht.

3. Begrünungsmatte nach Anspruch 1, dadurch gekennzeichnet, daß die Halteschicht (25) aus einem offenporigen Faservlies (26), -gewebe od. dgl. besteht.

4. Begrünungsmatte nach Anspruch 1, dadurch gekennzeichnet, daß die Wachstumsschicht (32) eine untere Lage aus Keimsubstrat (33) und eine obere Lage aus zwischen zwei offenporige Faservliese (36) od. dgl. eingebettetem Saatgut (34) aufweist, wobei das außenliegende Faservlies (36) die Halteschicht (35) bildet.

5. Begrünungsmatte nach einem der Ansprüche 1 bis 4, dadurch gekennzeichnet, daß die Trägerschicht (11, 21, 31, 41) aus einem unverrottbaren Kunstfaservlies, -gewebe od. dgl. besteht.

6. Begrünungsmatte nach Anspruch 5, dadurch gekennzeichnet, daß die Trägerschicht (41) aus zwei Lagen Kunstfaservlies (46) od. dgl. besteht, zwischen denen parallelverlaufende Bewässerungsschläuche (47) verlegt sind.

7. Begrünungsmatte nach Anspruch 6, dadurch gekennzeichnet, daß die Träger- und Wachstumsschichten (41, 42) in den Längsbereichen (48) der Bewässerungsschläuche (47) unvernadelt sind.
